# EUROPÄISCHE PATENTSCHRIFT

(11) **EP 0 828 581 B1**
(45) Veröffentlichungstag und Bekanntmachung des Hinweises auf die Patenterteilung: **28.07.1999**
(21) Anmeldenummer: 96915953.2
(22) Anmeldetag: 30.05.1996
(51) Int. Cl.: B23K 26/08

(54) **LASERSTRAHLGERÄT UND VERFAHREN ZUR BEARBEITUNG VON WERKSTÜCKEN**
LASER BEAM APPARATUS AND WORKPIECE MACHINING PROCESS
APPAREIL A FAISCEAU LASER ET PROCEDE DE TRAITEMENT DE PIECES

(30) Priorität: 30.05.1995 DE 19519150
(43) Veröffentlichungstag der Anmeldung: 18.03.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHLÜTER, Holger, D-52066 Aachen (DE); ZWICK, Axel, D-52064 Aachen (DE); WISSENBACH, Kurt, D-52146 Würselen (DE); BÜCHTER, Edwin, D-52074 Aachen (DE); REICHEL, Frank, D-52064 Aachen (DE); BARKHAUSEN, Winfried, NL-6291 Vaals JB (NL)
(74) Vertreter: Eichler, Peter, Dipl.-Ing.
(86) Internationale Anmeldenummer: DE9600941
(87) Internationale Veröffentlichungsnummer: WO9638257

(56) Entgegenhaltungen:
- EP-A- 0 102 732
- EP-A- 0 189 027
- EP-A- 0 213 471
- DE-A- 3 029 104
- DE-A- 4 005 453
- DE-A- 4 006 622
- US-A- 3 392 259
- US-A- 4 368 080
- US-A- 5 268 554

## Beschreibung

Die Erfindung bezieht sich auf ein Laserstrahlgerät zum Abtragen von Oberflächenschichten von Werkstücken, mit einem mit einer Fokussieroptik versehenen, handführbaren Strahlabgabekopf, der an eine einen Laserstrahl erzeugende Lasereinrichtung lichtzuleitend angeschlossen ist, der eine den Laserstrahl bewegende Strahlablenkrichtung aufweist, der den Laserstrahl mit einer Spitze seitlich abdeckt und ihn durch eine werkstückseitige Austrittsöffnung frei gibt, und der einen den Abstand des Strahlabgabekopfs vom Werkstück einzustellen erlaubenden Abstandhalter hat.

Ein Laserstrahlgerät mit den vorgenannten Merkmalen ist aus der DE-C-29 43 107 bekannt. Der Abstandhalter ist ein seitlich des Strahlabgabekopfs vorhandenes Gestell. Der Strahlabgabekopf hat eine den Laserstrahl radial abdeckende Spitze, die im Abstand vom Werkstück angeordnet ist und eine Austrittsöffnung hat. Die Austrittsöffnung ist so groß, daß der Laserstrahl auf einer vorbestimmten Bahn oszillieren kann. Eine Fokussierung des Laserstrahl auf die Werkstückoberfläche ist nicht gegeben. Das Laserstrahlgerät ist zum Einsatz mit einem CO₂-Laser konzipiert.

Darüber hinaus ist es aus der US-A-3 622 743 bekannt, ein miniaturisiertes Laserstrahlgerät geringer Leistung zum Entfernen von Druckbuchstaben auf Papier einzusetzen. Laserstrahlung wird nur dann eingeschaltet, wenn die Spitze des bekannten Geräts aufgedrückt und ein Mikroschalter geschlossen ist. Die Spitze erlaubt wegen der stets möglichen Schräghaltung keine Abdichtung am bearbeiteten Werkstück, so daß ein Abtragen von Oberflächenschichten mit größeren Laserleistungen nicht zulässig ist, weil dann eine Gefährdung des Bedieners und der Umwelt gegeben wäre.

Die Realisierung hoher mittlerer Leistungen fehlt allen zur Zeit erhältlichen mobilen Lasersystemen. Die hohen mittleren Leistungen, die sich mit der herkömmlichen Technik auch mobil und robust realisieren lassen, sind aber zwingend erforderlich, um akzeptable Flächenraten bzw. Bearbeitungszeiten zu ermöglichen. Nur so kann eine weite, vor allem industrielle Verbreitung des Gerätes erfolgen.

Demgegenüber liegt der Erfindung die Aufgabe zugrunde, ein Laserstrahlgerät mit den eingangs genannten Merkmalen so zu verbessern, daß es bei der Freihandführung mit großen mittleren Leistungen eingesetzt werden kann, wobei akzeptabele Flächenraten bzw. Bearbeitungszeiten ermöglicht werden sollen.

Diese Aufgabe wird dadurch gelöst, daß der Abstandhalter die den Laserstrahl seitlich abdeckende Spitze des Strahlabgabekopfs ist, die auf dem Werkstück abdichtend abstützbar ist, daß der Abstandhalter die den Laserstrahl seitlich abdeckende Spitze des Strahlabgabekopfs ist, die auf dem Werkstück abdichtend abstützbar ist, daß der Laserstrahl von der Strahlablenkeinrichtung auf einer vorbestimmten Bahn durch eine bahnangepaßte Austrittsöffnung des Abstandhalters oszillierbar ist, und daß die Fokussieroptik die Fokussierung des Laserstrahls in Abhängigkeit von der Strahlablenkung im Sinne eines auf der Werkstückoberfläche liegenden Fokus zu ändern vermag.

Es ist für das Laserstrahlgerät von Bedeutung, daß es einen vom Werkstück beaufschlagbaren Abstandhalter aufweist. Der Abstandhalter gewährleistet einen vorbestimmbaren Abstand des Strahlabgabekopfs vom Werkstück, zumindest aber einen vorbestimmten Mindestabstand, so daß die von der Lasereinrichtung zur Verfügung gestellte Leistung in einem insbesondere auch durch die Strahlablenkeinrichtung vorbestimmt großen Bereich der Werkstückoberfläche zur Wirkung gebracht wird. Vorbestimmte Intensitätswerte können unter Ausnutzung des Abstandhalters hinreichend genau eingehalten werden. Das Laserstrahlgerät kann für unterschiedliche Bearbeitungsverfahren eingesetzt werden. Das Abtragen von Oberflächenschichten von Werkstücken und die Bearbeitung von Oberflächen von Werkstücken sind ebenso möglich, wie das Trennen, das Fügen und das Bohren. Dabei kann der Abstandhalter den jeweiligen Einsatzzwecken entsprechend ausgebildet werden, ohne daß optische Teile des Strahlabgabekopfs ausgewechselt werden müßten. Als Lasereinrichtung kommen daher kommerziell erhältliche Laser in Frage, die nicht speziell für den Außeneinsatz konzeptioniert sein müssen. Werkstücktransporte können reduziert werden, da der handgeführte Strahlabgabekopf auf großen Fertigungsflächen ohne Bewegung der Lasereinrichtung eingesetzt werden kann.

Von besonderem Vorteil für wirtschaftliche Bearbeitung größerer Flächen mit kleinen Strahlflecken ist die strahlbewegende Strahlablenkeinrichtung. Die Strahlablenkeinrichtung bewegt den Laserstrahl vom Strahlabgabekopf ausgehend und relativ zum Werkstück. Der freihandgeführte oder auch ein von einer Handhabungseinheit geführter Strahlabgabekopf kann auch mit kleinem Strahlfleck großflächig arbeiten, wobei bei großen mittleren Leistungen hohe Intensitätswerte zur Wirkung kommen, jeweils angepaßt an das zu bearbeitende Werkstück und zwar so, daß das Bearbeitungsverfahren optimiert ist. Die Strahlablenkeinrichtung kann dabei den jeweiligen Einsatzzwecken entsprechend angepaßt werden. Sie wird beim Bohren beispielsweise stillgesetzt oder ein besonders stark fokussierter Laserstrahl wird auf der Bohrungsfläche beispielsweise kreisförmig bewegt. Die Steuerung der Strahlablenkeinrichtung kann dabei zur Optimierung des Bearbeitungsprozesses so ausgebildet werden, daß der Laserstrahl auch werkstückspezifische Flächen bearbeitet, beispielsweise Kreisflächen oder Dreiecksflächen. Diese zu bearbeitenden Flächen sind nicht größer als erforderlich, so daß die Einsatzzeit optimiert wird.

Die Art der Beaufschlagung des Abstandhalters zur Gewährleistung des erforderlichen Abstands des Strahlabgabekopfs von der Werkstückoberfläche wird in erster Linie durch die Anforderungen an die Genauigkeit der Abstandshalterung beeinflußt. Grundsätzlich ist es möglich, eine berührungsfreie Abstandshalterung vorzusehen. Ein solcher Abstandshalter kommt allerdings nur in Frage, wenn die Einstellungsgenauigkeit in einem Bereich liegt, der durch Handführung des Strahlabgabekopfs eingehalten werden kann. Das ist bei solchen Anwendungsfällen denkbar, die beispielsweise keine exakte Fokuslage erfordern, bei denen es also keine Rolle spielt, daß der eine vorbestimmte Intensität der Laserstrahlung gewährleistende Fokusbereich genau auf der Oberfläche des zu bearbeitenden Werkstücks angeordnet ist. In einer Mehrzahl von Einsatzfällen und insbesondere bei schnellem Arbeiten mit dem Strahlabgabekopf bzw. hoher Produktivität wird es jedoch vorteilhaft sein, den Fokus genau auf der Werkstückoberfläche zu plazieren. Das kann in einfacher Weise dadurch erreicht werden, daß der Abstandhalter werkstückseitig abstützbar ist. Durch die Abstützung am Werkstück wird der Strahlabgabekopf hinreichend genau auf dem durch die Länge des Abstandhalters vorbestimmten Abstand vom Werkstück gehalten. Im einfachsten Fall seiner Ausbildung kann der Abstandhalter ein auf der Werkstückoberfläche abgestützter Stift sein.

Bei Laserstrahlgeräten mit handgeführtem Strahlabgabekopf ist es von Bedeutung, ausreichende Maßnahmen zum Schutze des Anwenders zu treffen. In diesem Sinne kann das Laserstrahlgerät dadurch ausgestaltet werden, daß der Abstandhalter den abgegebenen Laserstrahl zwischen Werkstück und Strahlabgabekopf seitlich praktisch vollständig abdeckt. Der Abstandhalter wirkt hier auch als Berührungsschutz. Es ist nicht möglich, mit der Hand oder mit Gegenständen in den abgedeckten Strahlbereich zu gelangen. Eine Prozeßregelung kann auch eingesetzt werden, um die notwendige Bearbeitungszeit zu minimieren.

Die Vielzahl der möglichen Einsatzfälle des Laserstrahlgeräts bedingt es, daß unterschiedliche Abstandhalter eingesetzt werden. Es ist daher zweckmäßig, das Laserstrahlgerät so auszubilden, daß der Abstandhalter am Strahlabgabekopf auswechselbar befestigt ist und/oder daß die Fokussierungsoptik mit dem Strahlabgabekopf auswechselbar verbunden ist. Die konstruktive Lösung für die auswechselbare Befestigung des Abstandhalters am Strahlabgabekopf kann auf die Wechselbedingungen abgestimmt sein. Für häufiges Auswechseln ist beispielsweise eine bajonettartige Ausbildung des Abstandhalters und des Strahlabgabekopfs im Kupplungsbereich möglich. Entsprechend kann auch die Fokussierungsoptik ausgebildet werden, wenn diese mit dem Strahlabgabekopf auswechselbar verbunden ist. Das Laserstrahlgerät kann durch unterschiedliche Wechselobjektive leicht auf unterschiedliche Brennweiten abgestimmt oder an zu bearbeitende Oberflächen mit unterschiedlichen Krümmungen angepaßt werden kann.

Eine konstruktive Weiterbildung des Laserstrahlgeräts zeichnet sich dadurch aus, daß der Abstandhalter werkstückseitig Abdichtungsmittel und/oder gleitreibungsmindernde Mittel aufweist, die bedarfsweise mit einem Inkrementgeber zusammenwirken, der an eine Regeleinrichtung zur Regelung von Betriebsparametern, wie zur Regelung der Laserleistung im Sinne gleicher Leistung pro Flächeneinheit, der Lasereinrichtung angeschlossen ist. Die Abdichtungsmittel werden eingesetzt, wenn der Abstandhalter den Laserstrahl allseitig umgibt. Die infolgedessen erfolgende Strahlabschirmung wird durch die Abdichtung ergänzt. Es kann keine Laserstrahlung aus dem geschlossenen Raum innerhalb des Abstandhalters herausdringen. Die Abdichtung kann außerdem dazu dienen, sich bei der Bearbeitung entwickelnde Gase und Dämpfe nicht nach außen dringen zu lassen, wo sie personen- und sachgefährdend sein könnten. Zugleich kann durch die Abdichtung erreicht werden, daß eine Reoxidation metallischer Oberflächen reduziert wird. Zum Einsatz als Abdichtungsmittel kommen beispielsweise Gummilippen, Teflonaufsätze oder Aufsätze aus faserverstärktem Teflon, deren Werkstoff hinreichend hitzebeständig und widerstandsfähig gegen die sich beim Prozeß entwickelnden Gase und Dämpfe ist. Gleitreibungsmindernde Mittel sind beispielsweise Rollen oder Kugeln. Wenn derartige Rollen mit einem Inkrementalgeber zusammenwirken, lassen sich die Inkremente benutzen, um eine Regeleinrichtung zu steuern, mit der die Betriebsparameter der Lasereinrichtung an die Handführung oder auch an eine maschinelle Führung angepaßt werden. Falls nur wenig Inkremente pro Zeiteinheit abgegeben werden, wird die Laserleistung verringert. Umgekehrt wird die Laserleistung bei zahlreichen Inkrementen pro Zeiteinheit erhöht. Dadurch wird auf jedem Bereich der bearbeiteten Werkstückfläche die gleiche Energie pro Flächeneinheit aufgebracht, auch wenn die Bewegungsgeschwindigkeit des Strahlabgabekopfs infolge der Führung von Hand ungleichmäßig ist. Es erfolgt ein gleichmäßigerer Abtrag und eine verringerte Wärmebelastung der Oberfläche.

Die Abstandhalter können in einer Vielzahl von Ausgestaltungen angewendet werden. Insbesondere müssen sie unterschiedlich lang sein, falls unterschiedliche Brennweiten eingesetzt werden sollen. Sie müssen aber auch auf die Größe des Strahlflecks abgestimmt sein. Es ist daher vorteilhaft, das Laserstrahlgerät so auszubilden, daß der Abstandhalter längeneinstellbar und/oder in unterschiedlichen Querschnittsgestaltungen ausgebildet ist. Ein längeneinstellbarer Abstandhalter besteht beispielsweise aus unterschiedlich langen Teilen, oder aus Teilen, die in unterschiedlichen Stellungen z.B. über Rastungen für unterschiedliche Abstände miteinander verbunden werden, so daß jeweils die außerhalb des Verbindungsbereichs gelegenen Endflächen unterschiedliche Abstände zueinander aufweisen. Mit Hilfe der unterschiedlichen Querschnittsgestaltungen der Abstandhalter kann auf Bewegungen des Laserstrahls innerhalb des Abstandhalters Rücksicht genommen werden, beispielsweise auf mehr oder minder große Schwenkbewegungen zum Scannen des Laserstrahls. Je weiter die den Schwenkbereich des Laserstrahls begrenzenden Teile des Abstandhalters insbesondere von der mittleren Strahllage entfernt sind, um so weniger Bearbeitungsspuren müssen zur vollständigen Bearbeitung einer vorbestimmten Fläche nebeneinander gelegt werden. Je kleiner hingegen die werkstückseitige Öffnung eines des Laserstrahl umschließenden Abstandhalters ist, desto größer kann die Krümmung der bearbeiteten Oberfläche sein. Der Abstandhalter ist dann auch für komplexe Werkstückgeometrien besser geeignet. Die Vielzahl von Abstandhaltern, die notwendig ist, um flexibel auf die unterschiedlichen Werkstückgeometrien reagieren zu können ist jedoch annehmbar, weil mit ihnen ein optimales Behandlungsergebnis in kürzester Zeit erreicht werden kann.

Im vorbeschriebenen Sinn ist es auch vorteilhaft, das Laserstrahlgerät so auszubilden, daß die Austrittsöffnung für den Laserstrahl, an dessen Strahlfleck- bzw. Strahlquerschnittsform angepaßt ist und bedarfsweise eine zusätzliche Freifläche zur Beobachtung der Werkstückoberfläche hat. Es ergeben sich minimale Außenabmessungen eines den Laserstrahl seitlich praktisch vollständig abdeckenden Abstandhalters. Die Austrittsöffnung des Abstandhalters kann so gestaltet werden, daß alle vorgesehenen Bahnbereiche durch den Laserstrahl bestrichen werden können. Es ist aber auch möglich die Austrittsöffnung einem speziellen Bahnbereich anzupassen, beispielsweise einem linienförmigen Bahnbereich, auf dem der Laserstrahl hin- und herbewegt wird. Der Abstandhalter ist dann werkstückseitig handlicher. Wenn ein solcher Abstandhalter zusätzlich mit einer Freifläche zur Beobachtung der Werkstückoberfläche versehen ist, kann das Laserstrahlgerät mit einer Diagnostik- bzw. Steuereinrichtung betrieben werden, die zu ihrer Wirkung die Möglichkeit der Beobachtung der Werkstückoberfläche haben muß.

Das Laserstrahlgerät kann so weitergebildet werden, daß der Abstandhalter eine kegelstumpfförmige, eine pyramidenartige oder eine kreiszylinderförmige Hohlstruktur mit dünner Wand hat, die dem Bewegungsraum des relativ zum Abstandhalter beweglichen Laserstrahls angepaßt ist. Die kegelstumpfförmige Hohlstruktur ist insbesondere für einen sich kegelartig verjüngenden Laserstrahl geeignet und kann so ausgebildet werden, daß der baulich räumliche Aufwand des Abstandhalters klein bleibt. Die pyramidenartige Hohlstruktur, deren Austrittsöffnung bei hin- und hergehendem Laserstrahl schlitzartig oder rechteckförmig ist, eignet sich insbesondere für eine hin- und hergehende Führung des Laserstrahls. Die kreiszylinderförmige Hohlstruktur wird eingesetzt, wenn der Laserstrahl auf kreisförmigen Bahnen geführt wird, so daß die Austrittsöffnung deswegen entsprechend kreisförmig sein muß.

Um ein optimales Arbeitsergebnis insbesondere bei immer wiederkehrenden gleichen Bearbeitungsaufgaben zu erhalten, kann das Laserstrahlgerät so ausgebildet sein, daß der Abstandhalter werkstückseitig einer Profilierung des Werkstücks angepaßt ist, bedarfsweise mit einer im Bereich einer Austrittsöffnung angeschrägten Spitze. Beim Abtragen und Reinigen eines Werkstücks von Oberflächenschichten oder Beschichtungen lassen sich die Abtragrate und die Gleichmäßigkeit des Abtrags optimieren. Als Beispiel sei die Anpassung des Abstandhalters an den kreisförmigen Querschnitt eines Rohres genannt, auf dem das Laserstrahlgerät in Längsrichtung bewegt wird, wobei der an den Kreisquerschnitt angepaßte Abstandhalter zugleich eine Querführung des aufliegenden Strahlabgabekopfs bewirkt.

Eine Weiterbildung des Laserstrahlgeräts ist darin zu sehen, daß der Abstandhalter mit einer Schutzgas- und/oder Prozeßgas- und/oder Zusatzwerkstoff-Zuleitung versehen ist. Die Schutzgas-Zuleitung ist insbesondere vorteilhaft, um mit ihr durch Zuleitung von Schutzgas z.B. eine Reoxidation einer gereinigten Metalloberfläche zu verhindern. Schutzgas kann aber auch bei anderen Anwendungen zum Einsatz kommen, nämlich beim Trennen, Fügen, Bohren und Umwandeln durch Oberflächenaufschmelzung. Prozeßgaszuleitung kann ebenfalls für diese vorgenannten Verfahren eingesetzt werden, während die Zuführung von Zusatzwerkstoff insbesondere für das Fügen gedacht ist, bei dem etwaige Schweiß- oder Lötspalte mit Hilfe des Zusatzwerkstoffs geschlossen werden müssen. Im Zusammenhang damit kann das Laserstrahlgerät so ausgebildet werden, daß der Abstandhalter mit einer Absaugeinrichtung versehen ist. Es kann eine Absaugung der lokal auftretenden Emissionen erfolgen, beispielsweise eine Absaugung von Metalldämpfen. Eine Beeinträchtigung der Umwelt oder des Bedieners wird dadurch vermieden. Die abgesaugten Emissionen können an anderer Stelle unschädlich verarbeitet werden, z.B. durch Herausfiltern. Sie können die Beobachtung der Bearbeitungsstelle nicht beeinträchtigen.

Für die Sicherheit beim Arbeiten mit dem handgeführten Strahlabgabekopf ist es von Bedeutung, daß der Abstandhalter einen berührungsfrei wirkenden und/oder einen kontaktwirksamen Sensor zum Freischalten der Lasereinrichtung aufweist. Die Lasereinrichtung kann also nicht in Aktion treten, bevor nicht der Strahlabgabekopf in die ihm vorbestimmte Abstandsstellung bewegt wurde. Dabei wird der berührungsfrei wirkende Sensor nur dann zum Einsatz kommen, wenn der freie Abstand sehr gering ist oder durch andere Mittel gewährleistet werden kann, daß die Hände der Bedienungsperson nicht in den Strahlbereich des Laserstrahlgeräts gelangen können. Mit dem kontaktwirksamen Sensor wird insbesondere bei einem den Laserstrahl seitlich praktisch vollständig abdeckenden Abstandhalter ein geschlossener Raum erreicht, aus dem keine Laserstrahlung ungewollterweise heraustreten kann.

Um die gewünschte Funktion des Laserstrahlgeräts zu gewährleisten, ist dieses so ausgebildet, daß der Abstandhalter einen thermisch sensiblen Sensor zum Abschalten der Lasereinrichtung bei thermischer Überlastung der Werkstückoberfläche hat und/oder an einen Spektrographen zur on-line-Analyse von vom Werkstück herrührender Emissionen angeschlossen ist. Der thermische Sensor ist beispielsweise ein Pyrodetektor. Er vermeidet eine thermische Überlastung der zu bearbeitenden Oberfläche des Werkstücks durch zumindest zeitweilige Abschaltung der Lasereinrichtung. Mit Hilfe der on-line-Analyse der vom Werkstück herrührenden Emissionen kann beispielsweise beim Abtragen von Werkstückbeschichtungen oder unerwünschten Werkstückschichten erreicht werden, das Ende der notwendigen Behandlungszeit festzustellen, indem beispielsweise für die abzutragende Schicht charakteristische Bestandteile nicht mehr ermittelt werden.

Es kann eine Weiterbildung des Strahlgeräts dadurch erfolgen, daß die Strahlablenkeinrichtung mit mindestens einem beweglichen Spiegel und/oder mit einem Rotationsspiegel mit Schrauben-Wendelfläche ausgerüstet ist. Mit Hilfe des schwingenden Spiegels oder des eine Schrauben-Wendelfläche aufweisenden Rotationsspiegels, z.B. gemäß DE 39 39 577 C2, wird der Laserstrahl über eine größere Strecke gescannt bzw. geführt und die davon betroffene Werkstückoberfläche wird bearbeitet. Beispielsweise wird dort vorhandener Zunder abgetragen. Die Scanngeschwindigkeit muß so gewählt werden, daß die erforderliche Energiedichte gewährleistet wird, um den für die Bearbeitung benötigten Energieeintrag zu gewährleisten.

Beim Einsatz zweier beweglicher Spiegel bzw. Ablenkeinheiten ist auch ein kreisförmiger Abtrag denkbar, ähnlich dem eines Schwingschleifers. Das bietet den Vorteil, daß die Bahn keine Umkehrpunkte hat, in denen die Wechselwirkungszeit infolge der Richtungsänderung eines Schwingspiegels in unerwünschterweise vergrößert ist. Durch zwei Schwingspiegel kann auch eine Strukturierung der Oberfläche des Werkstücks erfolgen. Die Strukturierung kann durch Einsatz eines Inkrementgebers präzisiert werden, auch wenn nur ein einziger Spiegel eingesetzt wird.

Wenn vermieden werden soll, daß bei der Oberflächenbearbeitung ein größerer Abtrag an den Umkehrpunkten der Bahn eines Schwingspiegels auftritt, kann das Laserstrahlgerät so ausgebildet werden, daß die Winkelgeschwindigkeit des beweglichen Spiegels on-line meßbar ist und aufgrund dessen Betriebsparameter der Lasereinrichtung derart steuerbar sind, daß jeder Punkt der Werkstückoberfläche mit der gleichen Energiedichte beaufschlagt wird. Die Winkelgeschwindigkeit des Galvanometerspiegels kann on-line gemessen bzw. aus den mechanischen und den elektrischen Eigenschaften berechnet werden. Es erfolgt eine Korrektur der Betriebsparameter der Laserstrahleinrichtung entsprechend der Winkelgeschwindigkeit, so daß auf jedem Punkt der bearbeiteten Oberfläche die gleiche Energie je Zeiteinheit deponiert wird.

Aufgrund der Massen des bewegten Systems ist die Messung bzw. Berechnung der Winkelgeschwindigkeit nur begrenzt einsetzbar. Es kann daher von Vorteil sein, das Laserstrahlgerät so auszubilden, daß der Abstandhalter werkstückseitig mit mindestens einer Strahlfalle versehen ist, die in den Bereich der Umkehrpunkte der Laserstrahlbahn hineinragt. Mit der Strahlfalle wird der kritische Umkehrbereich des Strahls ausgeblendet. Ein übermäßiger Energieeintrag wegen verringerter Scanngeschwindigkeit und damit eine unerwünschte Schädigung des bearbeiteten Materials findet nicht statt.

Bei Einsatz einer Strahlfalle kann das Laserstrahlgerät so ausgebildet werden, daß die Strahlfalle gekühlt und/oder quer zum Laserstrahl verstellbar und/oder bei Bestrahlung mit dem Laserstrahl signalgebend und/oder Gasströmungsquerschnitte verändernd ausgebildet ist. Die Kühlung einer Strahlfalle, die z.B. aus eloxiertem Aluminiumblech hergestellt ist, vermeidet eine Beschädigung der Strahlfalle. Die Verstellung der Strahlfalle, die eine Austauschbarkeit voraussetzt, erlaubt eine Anpassung an unterschiedliche Breiten, so daß mit demselben Abstandhalter verschiedene Bearbeitungsbreiten erzielt werden können. Strahlfallen können bei Bestrahlung mit dem Laserstrahl signalgebend ausgebildet sein, um die Steuereinrichtung der Lasereinrichtung über die jeweilige tatsächliche Strahlbreite zu informieren. Es können eindeutig kodierte Kontakte verwendet werden, über die der Laserstrahl gescannt wird. Die Signale der Kontakte erleichtern die Kontrolle bzw. die Einstellung der Scannbreite. Mit Hilfe der Strahlfalle bzw. ihrer Verstellbarkeit können Gasströmungsquerschnitte so verändert werden, daß sie den Öffnungsquerschnitt der Absaugung und/oder der Schutzgaszufuhr entsprechend der zu bearbeitenden Breite verringert und die Steuereinrichtung zu einer entsprechend verminderten Absaugleistung oder Schutzgaszufuhr veranlaßt.

Bei einer weiteren Ausgestaltung des Laserstrahlgeräts ist vorgesehen, daß der Strahlabgabekopf mit einer den Fokus des Laserstrahls auf einer gekrümmten oder planen Oberfläche des Werkstücks abbildenden Fokussieroptik versehen ist. Diese Ausgestaltung ist insbesondere für solche Laserstrahlgeräte von Bedeutung, die einen schwenkbaren Laserstrahl haben und bei denen es auf eine genaue Positionierung des Fokus des Laserstrahls im Bezug auf die Oberfläche des Werkstücks ankommt. Diese sogenannte Planfeldoptik gewährleistet, daß der Fokus des abgelenkten Strahls unabhängig von seinem Schwenken in einer planen Ebene verläuft, beispielsweise in der planen Ebene einer Oberfläche des zu bearbeitenden Werkstücks. Damit wird gewährleistet, daß die Intensität der Laserstrahlung über den gesamten Bearbeitungsbereich überall auf dem flachen Werkstück in gleichem Maße vorhanden ist. Wenn gekrümmte Geometrien bearbeitet werden sollen, z.B. Rohre, ist es möglich, die Fokussieroptik so auszubilden, daß der Fokus der Laserstrahlung stets auf einer ebenso gekrümmten Oberfläche abgebildet wird. Hierbei versteht es sich, daß der dabei zur Anwendung kommende Abstandhalter entsprechend gekrümmt ist.

Eine Weiterbildung des Laserstrahlgeräts wird dadurch gebildet, daß der Strahlabgabekopf zumindest mit der optischen, den Bearbeitungsbereich beobachtenden Komponente eines Bildverarbeitungssystems das bedarfsweise mit einer auf die Strahlablenkeinrichtung wirkenden Nahtverfolgungseinrichtung versehen ist. Die optische Komponente eines derartigen Bildverarbeitungssystems besteht beispielsweise aus einer CCD-Zeile, mit der der Bearbeitungsbereich des Werkstücks beispielsweise durch die vorgenannte Freifläche des Abstandhalters hindurch beobachtet wird. Diese optische Komponente meldet entsprechende Signale dem Bildverarbeitungssystem, das in die Lasereinrichtung integriert sein kann. Von hier aus wird beispielsweise das Bearbeitungsergebnis überwacht oder es werden kontrastreiche Strukturen gemeldet, wie beispielsweise eine Blechkante. Dabei kann das Bildverarbeitungssystem in Verbindung mit einem Nahtverfolgungseinrichtung eingesetzt werden, mit dem die Strahlablenkeinrichtung gesteuert wird. Mit diesem wird der Laserstrahl so ausgelenkt, daß er im gewünschten Bearbeitungs- oder Nahtbereich wirkt. Eine Nachführung des Strahlabgabekopfes ist nicht erforderlich, so lange gewährleistet ist, daß sich der Bearbeitungsbereich bzw. die Naht innerhalb der Aufsatzbreite von z.B. typischerweise 5 cm befindet. Die Nahtverfolgungseinrichtung ermöglicht es, per Hand Bleche miteinander zu verschweißen oder eine Naht zu entzundern, ohne die Naht genauer als auf wenige Zentimeter in der Breite verfolgen zu müssen. Die Nahtverfolgungseinrichtung hat dafür die erforderliche Möglichkeit zur Schwingspiegelsteuerung.

Das Laserstrahlgerät kann auch so ausgebildet werden, daß es mit einer Autofokuseinrichtung für die Laserstrahlung versehen ist. Die Autofokuseinrichtung kann auf evtl. Unebenheiten in der zu bearbeitenden Oberfläche reagieren, indem es beispielsweise den Fokus des Laserstrahls nachführt. Hierzu wird es eine verstellbare Linse oder einen verstellbaren Spiegel haben, mit dem diese Fokusnachführung bewirkt werden kann. Ein solches Autofokussystem ist auch geeignet, um den Fokus des Laserstrahls der Schmelzfront beim Bohren nachzuführen.

Eine weitere den Sicherheitsaspekt des Laserstrahlgeräts betreffende Ausgestaltung wird erreicht, wenn der Strahlabgabekopf mit einem Zwei-Hand-Bedienung erzwingenden Griffbereich ausgebildet ist. Die Zweihandbedienung schließt aus, daß das Gerät mit nur einer Hand eingeschaltet bzw. bedient werden kann. Es ist nicht möglich, unbeabsichtigt in den Laserstrahl zu fassen.

Es ist vorteilhaft, das Laserstrahlgerät so auszugestalten, daß der Strahlabgabekopf mit einer freibeweglichen Lichtwellenleitung an die Lasereinrichtung angeschlossen ist und eine Justiereinrichtung zur axialen und radialen Positionierung des Endes der eine oder mehrere Fasern aufweisenden Lichtwellenleitung aufweist. Die freibewegliche Lichtwellenleitung zwischen dem Strahlabgabekopf und der Lasereinrichtung verbessert die Handhabung des Strahlabgabekopfes in einem Maße, wie es durch leitungsgebundene Geräte allgemein bekannt ist. Die Lichtwellenleitung kann eine beträchtliche Länge haben, z.B. kann sie 100 m lang sein, was einen dadurch bestimmten großen Raum für die Handhabung des Strahlabgabekopfs bedingt. Die Flexibilität der Lichtwellenleitung ist so groß, daß die Beweglichkeit des Strahlabgabekopfs relativ zur Lasereinrichtung praktisch überhaupt nicht eingeschränkt ist. Mit der Justiereinrichtung kann das Faserende durch das Servicepersonal oder auch durch die Bedienungsperson sowohl in der Faserachse als auch senkrecht dazu justierbar sein, also in drei nichtgekoppelten Richtungen.

Wenn es bei einer solchen Lichtwellenleitung erforderlich ist, sehr hohe Puls-Spitzenleistungen zu übertragen, beispielsweise zur Gesteinsreinigung, so kann es zu einer Gefährdung eines einzelnen Lichtleiters kommen. Um dennoch solche Anwendungen nicht ausschließen zu müssen, kann der Laserstrahl geteilt und durch mehrere Fasern transportiert werden, um dann im Strahlabgabekopf über einen weiteren Strahlteiler wieder zu einem einzigen Laserstrahl vereinigt zu werden. Das macht eine entsprechend sensible einstellbare Faserauskopplung für diese mehreren Fasern erforderlich.

Die Erfindung bezieht sich auch auf ein Laserstrahlgerät zur Bearbeitung von Werkstücken, mit einem eine Fokussierungsoptik aufweisenden, den Laserstrahl abgebenden Bearbeitungskopf, und mit einer den Betrieb einer Lasereinrichtung in Abhängigkeit von Betriebsparametern beeinflussenden Steuereinrichtung.

Der Steuereinrichtung müssen die erforderlichen Betriebsparameter zur Verfügung gestellt werden, mit denen die Laserbearbeitung des Werkstücks durchzuführen ist. Alle Bearbeitungsverfahren erfordern die mehr oder weniger genaue Einstellung der Betriebsparameter der Lasereinrichtung, wie mittlere Leistung, Pulsform und -dauer, Leistungsdichteverteilung, Pulsfolgefrequenz, Polarisationszustand, Fokuslage usw., wie auch der Verfahrensparameter, nämlich Vorschub- und Ablenkungsgeschwindigkeit des Laserstrahls, Schutz- und Prozeßgasparameter usw. Diese können dem Benutzer des Laserstrahlgeräts mitgeteilt werden, er muß sie aber selbst einstellen. Andrerseits soll das Laserstrahlgerät, zumindest aber sein Strahlabgabekopf handgeführt eingesetzt werden. Die daraus resultierende Mobilität ist für ein flexibles Arbeiten vor Ort gedacht, wo darüber hinaus die Einsatzarten und die Werkstückgestaltungen besonders vielfältig sein können. Insbesondere bei einem derartigen mobilen Laserstrahlgerät ist die Gefahr daher besonders groß, daß die Einstellung fehlerhaft erfolgt. Das gilt insbesondere im Hinblick darauf, daß das Laserstrahlgerät einer breiten Schicht von Benutzern zur Verfügung gestellt werden soll, deren Ausbildung zum Einsatz solcher Geräte nicht besonders qualifiziert sein dürfte.

Der Erfindung liegt daher die Aufgabe zugrunde, ein Laserstrahlgerät mit den vorgenannten Merkmalen dahingehend zu verbessern, daß der Benutzer möglichst wenig Kenntnisse über den Prozeß und die Laserstrahlquelle bzw. die Lasereinrichtung benötigt, sondern lediglich wissen muß, welches Material er wie bearbeiten will.

Diese Aufgabe wird dadurch gelöst, daß es mit einem die Betriebsparameter und/oder die Verfahrensparameter aufweisenden auswechselbaren Datenträger als Steuermittel ausgerüstet ist.

Für diese Ausgestaltung ist es also wesentlich, daß die Betriebsparameter mittels auswechselbarer Datenträger eingegeben werden, wobei der Benutzer vorbereitete Datenträger verwendet, die ihm für bestimmte Einsatzbereiche des Laserstrahlgeräts zur Verfügung gestellt werden. Dabei ist das Laserstrahlgerät so ausgebildet, daß der Datenträger ein ausschließliches Steuermittel ist, welches unbedingt vorhanden sein muß, um das Gerät überhaupt betreiben zu können. Mit einem derartigen Datenträger können alle Laserstrahl- und Verfahrensparamter auf das jeweils gewählte Verfahren abgestimmt werden, beispielsweise auf das Trennen, das Fügen, das Bohren, das Abtragen oder das Oberflächenbehandeln. Bei einem Reinigen der Oberfläche eines Werkstücks kann die bearbeitete Grundmaterial/Deckschicht-Kombination vorgegeben werden, wie z.B. auch die Deckschichtdicke, beim Bohren z.B. der Bohrungsdurchmesser oder beim Trennen die Schnittfugenbreite.

Zweckmäßigerweise ist der auswechselbare Datenträger eine Chipkarte. Diese ist wenig raumaufwendig und es kann eine Vielzahl von Chipkarten für unterschiedliche Einsatzfälle ohne großen Raumbedarf zur Verfügung gestellt werden.

Es ist vorteilhaft, das Laserstrahlgerät so auszubilden, daß die Schutzgas- und/oder Prozeßgas- und/oder Zusatzwerkstoff-Anwendung mit dem auswechselbaren Datenträger steuerbar ist. Der sich dadurch ergebende Mehraufwand bei der Erstellung des Datenträgers ist gering, verglichen mit dem Fehlbearbeitungsrisiko bei Einstellung von Hand.

Andrerseits muß gewährleistet sein, daß der Benutzer des Laserstrahlgeräts genügend individuell auf unterschiedliche Werkstücke und Werkstückbearbeitungen reagieren kann. Hierzu ist das Lasergerät so ausgebildet, daß es zusätzlich zum auswechselbaren Datenträger individuell verstellbare Einstellorgane für speziell werkstückabhängige Betriebseinflußgrößen hat. Derartige Betriebseinflußgrößen können beispielsweise eine Deckschichtdicke oder ein Verschmutzungsgrad sein. Die Einstellorgane sind beispielsweise Drehknöpfe, mit denen frei programmiert werden kann. Die Abstimmung zum Datenträger sollte so sein, daß eine möglichst einfache Bedienung zu erzielen ist, die es auch dem Laien ermöglicht, das Gerät zu benutzen. Beispielsweise werden die durch die Drehknöpfe einstellbaren Betriebseinflußgrößen über LCD-Anzeigen sichtbar gemacht, wobei die Anzeige vorzugsweise über den Datenträger gesteuert wird.

Eine weitere Möglichkeit zur bedienungsfreundlichen Ausgestaltung des Laserstrahlgeräts ist dadurch gegeben, daß es mit einem Balkencodeleser versehen ist, mit dem der Einsatz des zutreffenden auswechselbaren Datenträgers kontrollierbar und/oder die Auswahl der speziell werkstückabhängigen Betriebseinflußgrößen in Abhängigkeit von einem mit einem Balkencode versehenen, zur Bearbeitung vorgesehenen Werkstück zu treffen ist. Mit einem Balkencode versehene, zur Bearbeitung vorbestimmte Werkstücke können mit dem Balkencode-Leser abgetastet werden und die dadurch der Steuereinrichtung des Laserstrahlgeräts vermittelte Code-Information führt zu einer Aktivierung voreingegebener Daten. Mit diesen Daten kann beispielsweise abgeglichen werden, ob ein für ein vorbestimmtes Werkstück vorbestimmter Datenträger in das Laserstrahlgerät eingesteckt wurde. Speziell werkstückabhängige Betriebsgrößen können in den Datenträger oder in die Steuereinrichtung eingegeben sein und mit Hilfe des Balkencodes angezeigt oder zur Vermeidung einer aufgrund dieser Anzeige vorzunehmenden Einstellung direkt aktiviert werden. Das Werkstück wird also dazu benutzt, eine Voreinstellung des Laserstrahlgeräts zu aktivieren. Eine derartige Ausgestaltung des Laserstrahlgeräts erleichtert seine Anwendung insbesondere bei häufig in ihrer Art wechselnden Werkstücken, die möglicherweise auch noch mit unterschiedlichen Verfahren bearbeitet werden sollen.

Das Laserstrahlgerät kann so ausgebildet werden, daß die vorbestimmte Bahn des Laserstrahls eine Linie einstellbarer Breite oder ein Kreis einstellbaren Durchmessers oder eine Ellipse einstellbarer Halbachsen ist. Mit Linien, Kreisen und Ellipsen lassen sich jeweils Anpassungen an die Geometrie der Werkstücke erreichen und Abtragsergebnisse optimieren. Die erforderlichen Anpassungen der Austrittsöffnung des Abstandhalters an die vorgenannten Bahnformen ist problemlos.

Die Erfindung bezieht sich auch auf ein Verfahren zum Abtragen von Oberflächenschichten von Werkstücken mit einem eine Fokussierungsoptik und eine Strahlablenkeinrichtung aufweisenden, einen Laserstrahl abgebenden Bearbeitungskopf, der freihandgeführt wird. Ein solches Verfahren ist aus der DE-C-29 43 107 bekannt. Es wird ein Abtastsystem mit Schwingspiegel zur schnellen Überdeckung ebener Flächen eingesetzt. Vorgaben über den Abstand des Bearbeitungskopfs vom Werkstück und über die Fokussierung werden nicht gegeben.

Demgegenüber soll das vorgenannte Verfahren dahingehend ausgebildet werden, daß der Laserstrahl während des Freihandführens durch Strahlablenkung mit einem auf der Werkstückoberfläche liegenden Fokus oszilliert wird. Das Oszillieren des Laserstrahls mit einem auf der Werkstückoberfläche liegenden Fokus erlaubt das Arbeiten mit kleinem Strahlfleck auf großen Flächen, so daß bei großen mittleren Leistungen hohe Intensitätswerte zur Wirkung kommen und ein gutes Abtragsergebnis erreicht wird.

Die Erfindung bezieht sich des weiteren auf ein Verfahren zum Abtragen von Oberflächenschichten von Werkstücken, mit einem eine Fokussierungsoptik und eine Strahlablenkeinrichtung aufweisenden, einen Laserstrahl abgebenden Bearbeitungskopf, der an eine Laserstrahlung erzeugende Lasereinrichtung lichtzuleitend angeschlossen ist, insbesondere zur Anwendung bei Laserstrahlgeräten

Ein derartiges Verfahren ist allgemein bekannt und wird insbesondere zur Reinigung von Steinflächen eingesetzt. Die dabei zur Anwendung kommende Laserleistung liegt im Bereich weniger Watt. Wenn dabei mit hohen Intensitäten gereinigt werden soll, muß die Lasereinrichtung im Impulsbetrieb arbeiten, wobei die Zeit zwischen zwei Impulsen vergleichsweise groß sein muß. Es ergeben sich infolgedessen nur sehr geringe Flächenraten.

Der Erfindung liegt daher die Aufgabe zugrunde, ein Verfahren mit den vorgenannten Verfahrensschritten so zu verbessern, daß Deckschichten von Metallen, nämlich Zunderschichten, mit annehmbaren Flächenraten entfernt werden können.

Diese Aufgabe wird dadurch gelöst, daß es zum Entzundern von nicht rostendem Stahl mit einer Zunderschicht vom Warmwalzen mit einer Intensität von etwa 10⁶ bis 10⁷ W/cm² bei einer Energiedichte von etwa 100 J/cm² auf der Werkstückoberfläche eine Zunderschicht von etwa 3 bis 15 µm durchgeführt wird, wobei eine auf den bestrahlten Bereich der Werkstückoberfläche gerichtete Schutzgaszufuhr erfolgt.

Durch Einwirkung intensiver Laserstrahlung kann innerhalb von Sekundenbruchteilen die Verdampfung beliebiger Materialien erreicht werden. Bei metallischen Werkstoffen findet der Materialabtrag beispielsweise über ein Verdampfen ohne Schmelzeaustrieb statt. Dabei muß die Deckschicht über die Verdampfungstemperatur erhitzt werden. Hierzu muß die zum Verdampfen notwendige Energie deutlich höher sein, als bei einem Aufschmelzverfahren mit anschließendem Austrieb der Schmelze. Die Abtragtiefe läßt sich beim reinen Verdampfen jedoch wesentlich genauer steuern, so daß es möglich ist, nur die Deckschicht abzutragen, ohne die Oberfläche des Grundwerkstoffs merklich zu verändern, selbst wenn die Dicke der Deckschicht nur einige µm beträgt. Wird die Deckschicht vollständig abgetragen, so kann es beispielsweise beim Entzundern nichtrostender Stähle zum Aufschmelzen des Grundmaterials bis in eine Tiefe von einigen µm kommen. Dieser Effekt ist beim Entzundern durchaus erwünscht, da er zu einer Verbesserung der Korrosionseigenschaft führt. Die Tiefe der Umschmelzzone kann über die Wechselwirkungszeit der Laserstrahlung gesteuert werden.

Der Abtrag der Deckschicht durch Verdampfen kann sowohl mit gepulster als auch mit kontinuierlicher Laserstrahlung erfolgen. Deren Intensität I und die Energiedichte H müssen unabhängig voneinander auf die Materialeigenschaften der Deckschicht und des Grundmaterials abgestimmt werden. Die benötigte Intensität I ergibt sich aus der erforderlichen Oberflächentemperatur, nämlich der zur Verdampfung erforderlichen Temperatur und wird über die Laserleistung und die Strahlfläche eingestellt. Die Energiedichte H bestimmt den Abtrag pro Puls bzw. pro Überfahrt und die Wärmebeeinflussung des Grundmaterials. Sie kann aus der Pulsenergie bzw. aus der über die Pulsdauer integrierten Intensität der Laserstrahlung berechnet werden, wenn impulsweise gearbeitet wird, oder sie ergibt sich bei kontinuierlicher Bearbeitung aus der Intensität und der Wechselwirkungszeit der Laserstrahlung. Reicht die Energiedichte bei einmaliger Überfahrt über die Deckschicht bzw. bei einem Puls pro Fläche nicht zur vollständigen Entfernung der Deckschicht aus, muß diese mehrmals bearbeitet werden. Dabei ist zu bedenken, daß die Absorptions- und Reflexionseigenschaften der Deckschicht von deren Dicke abhängen. Da sich diese Dicke beim Abtragen ändert, können sich auch die Absorptions- und Reflexionseigenschaften ändern. Bei metallischem Grundmaterial nimmt die Absorption in der Regel ab und die Reflexion zu. Absorbiert die Deckschicht die Laserstrahlung der ausgewählten Wellenlänge gut, das darunter liegende Grundmaterial jedoch nicht so gut, so kann dies für einen selbstbegrenzenden Abtragprozeß ausgenutzt werden. Zu Beginn des Prozesses wird ein großer Teil der eingestrahlten Laserstrahlung absorbiert und führt zum Verdampfen der Deckschicht. Ist diese abgetragen, trifft die Laserstrahlung auf das Grundmaterial und wird weitgehend reflektiert, so daß eine Schädigung des Grundmaterials nicht erfolgt. Ist die Wellenlänge der verwendeten Laserstrahlung nicht dafür geeignet, daß ein selbstbegrenzender Abtragprozeß abläuft, kann eine Prozeßregelung eingesetzt werden, um eine Beeinflussung des Grundmaterials zu vermeiden. Das ist beispielsweise durch Plasmaemissionsspetroskopie möglich, bei der eine on-line-Analyse der verdampfenden Elemente vollzogen wird.

Es ist nun gelungen, das Entzundern warmgewalzten nichtrostenden Stahls durch Anwendung der oben genannten Verfahrensschritte zu erreichen, wobei zugleich eine Reoxidation des von der Deckschicht bzw. vom Zunder befreiten Werkstoffs verhindert wird.

Als Beispiel wird die Entfernung von bis 15 µm dicken Zunderschichten auf warmgewalztem nichtrostendem X5CrNi 1810 oder X6CrNiMoTi 1722 mit CO₂-Laserstrahlung genannt, bei der die oben genannten Verfahrensschritte wie folgt präzisiert werden:
Intensität bzw. Leistungsdichte: 1x 10⁶ W/cm²
Energiedichte: 100 J/cm²
Mittlere Leistung: 750 W

Wechselwirkungszeit: 50 µs bei einer Vorschubgeschwindigkeit von etwa 300 m/min, einem Strahlradius 150 µm und eim Spurversatz von 125 µm bei einer Überfahrt. Es resultiert eine Flächenrate von 3,6 cm²/sec.

Bei höheren Leistungen und erhöhten Vorschubgeschwindigkeiten lassen sich entsprechend höhere Flächenraten erreichen.

Der Schutz gegen Reoxidation wird durch eine Runddüse aus Kupferrohr mit einem Innendurchmesser von 4 mm erreicht, mit der das Schutzgas an den Bearbeitungsort geleitet wird. Das Schutzgas Helium wird mit einem Durchfluß von 5 - 20 l/min bei einem Arbeitsabstand von 13 mm in einem Winkel von 60° zur Senkrechten zugeführt. Die Zuführung erfolgt quer zur Vorschubrichtung, damit sich abgetragene Partikel nicht auf dem bearbeiteten Bereich absetzen können.

Bei den angegebenen Parametern verbessern sich die Korrosionseigenschaften der behandelten Oberfläche deutlich. Das konnte anhand des Lochfraßpotentials nachgewiesen werden. Das Lochfraßpotential in mV ist um so größer, je korrosionsbeständiger der Werkstoff ist. Es zeigt sich, daß die Werte für das Lochfraßpotential bei allen laserstrahlbehandelten Proben die Werte für das Lochfraßpotential der gebeizten Proben in nahezu allen Bereichen übertreffen. Das kritische Lochfraßpotential wird in einer 0,5% NaCl-Lösung bei einer Temperatur von 30° bestimmt. Es ist daher klar, daß die Laserstrahlbehandlung gegenüber dem bisher als vorteilhaftestes Verfahren bekannten Beizen Vorzüge beim Entzundern hat. Das wird darauf zurückgeführt, daß durch ein geringfügiges Anschmelzen des Grundmaterials des zu entzundernden Werkstoffs die Oberfläche desensibilisiert wird. Eine Beseitigung von Kornschäden beim Beizen tritt jedoch nicht ein. Eine derartige Kornschadenbeseitigung durch Laserstrahlung ist daher eine bislang nicht ausgenutzte Besonderheit des Entzunderns mit Laserstrahlung bei den vorgenannten Verfahrensschritten und Parametern.

Es ist von erheblicher wirtschaftlicher Bedeutung, daß beim Entzundern als Schutzgas Stickstoff verwendet wird. Stickstoff ist wesentlich preiswerter, als andere vergleichbare Enertgase, so daß der gesamte Entzunderungsprozeß entsprechend verbilligt werden kann.

Die Erfindung wird anhand eines in der Zeichnung dargestellten Ausführungsbeispiels erläutert. Es zeigt:
- Fig.1: einen Längsschnitt durch einen Strahlabgabekopf des Laserstrahlgeräts quer zur Schwenkachse eines Schwingspiegels,
- Fig.2: einen gegenüber Fig.1 um 90° gedrehten Längsschnitt in der Ebene der Achse des Schwingspiegels,
- Fig.3: eine schematische Schnittdarstellung eines Abstandhalters des Strahlabgabekopfs der Fig.1,2,
- Fig.4: eine schematische Schnittdarstellung eines weiteren Abstandhalters, und
- Fig.5: eine Schnittdarstellung, die sowohl für den Abstandhalter der Fig.3 sowie für den Abstandhalter der Fig.4 maßgeblich sein kann.

Das gesamte in Rede stehende Laserstrahlgerät zur Bearbeitung von Werkstücken besteht aus einer nicht dargestellten Lasereinrichtung, welche einen die Laserstrahlung erzeugenden Laser aufweist, und aus einem Strahlabgabekopf 11, mit dem ein Laserstrahl 12 auf ein nicht dargestelltes Werkstück gerichtet wird. Der Übermittlung der Laserstrahlung von der Lasereinrichtung zum Strahlabgabekopf 11 dient eine Lichtwellenleitung 13, die z.B. aus einer einzigen Lichtleitfaser besteht. Bei der Übertragung sehr hoher Laserstrahlintensitäten kann die Lichtleitfaser jedoch überlastet werden, weil die Zerstörschwelle des Fasermaterials überschritten wird. Es ist dann erforderlich, mehrere Lichtleitfasern einzusetzen, was im Prinzip unproblematisch ist. Durch einen geeigneten Strahlteiler kann die Laserstrahlung auf mehrere Lichtleitfasern verteilt werden, so daß in keiner der Fasern die Zerstörschwelle überschritten wird. Am Ende des Lichtwellenleiters 13, nämlich im Bereich des Strahlabgabekopfes 11 ist dann ein nicht dargestellter, invers wirkender Strahlteiler vorhanden, der die aus den mehreren Lichtleitfasern herrührenden Einzelstrahlen zu dem Laserstrahl 12 zusammenfaßt. Diese Ausgestaltung ist nicht abgebildet, ebenso nicht, wie eine Justiereinrichtung mit der das Ende der Lichtwellenleitung 13 axial oder radial positioniert wird.

Im Gehäuse 24 des Strahlabgabekopfs 11 ist eine Fokussieroptik 10 vorhanden. Des weiteren ist eine Kollimatorlinse 25 vorhanden, welche die aus der Lichtwellenleitung 13 herrührende Laserstrahlung parallelisiert und einem Umlenkprisma 26 zuführt, von dem aus die Strahlung zu einem Spiegel 22 gelangt. Der Spiegel 22 lenkt die Strahlung in die abgabeseitig angeordneten dargestellten Linsen der Fokussieroptik 10, mit denen der Laserstrahl 12 den Fokus F erhält.

Der Spiegel 22 ist um eine Schwenkachse 22' schwenkbeweglich. Der Antrieb des Schwingspiegels 22 erfolgt beispielsweise über einen Oszillator, der in einem Handgriff 28 untergebracht ist. Durch die oszillierende Bewegung des Spiegels 22 wird der Laserstrahl 12 in den Richtungen des Doppelpfeils 29 bewegt, so daß der Fokus F des Laserstrahl 12 eine entsprechende um die Schwenkachse 22' gerichtete Schwenkbewegung vollführt. Nur wenn das Werkstück entsprechend konkav ausgebildet ist, liegt der Fokus stets genau auf der Werkstückoberfläche. In der Regel sind jedoch planebene Werkstükke zu bearbeiten. Infolgedessen ist es vorteilhaft, die Fokussieroptik 10 als Planfeldoptik auszubilden, durch die die Fokussierung in Abhängigkeit vom Schwenkwinkel geändert wird. Es ist beispielsweise möglich, den Fokus so ausbilden zu lassen, daß die von ihm beschriebene Bahn geradlinig ist, damit planebene Werkstücke mit optimaler Energieeinkopplung in die zu entfernende Deckschicht bearbeitet werden können. Die Fokussieroptik 10 kann bedarfsweise auch so ausgebildet werden, daß der Fokus F auf einer vom Strahlabgabekopf 11 gesehen konvexen Bahn verläuft, was für das Bearbeiten der Außenflächen von Rohren vorteilhaft ist.

Die vorbeschriebene präzise Positionierung des Fokus F ist insbesondere dann von Bedeutung, wenn mit hohen mittleren Leistungen gearbeitet werden muß, um Deckschichten mit sehr hohen Strahlungsintensitäten abtragen zu können, und zwar mit akzeptablen Flächenraten bzw. Bearbeitungszeiten. Die präzise Positionierung des Fokus F wirkt dann in einem Sinne, daß beispielsweise ein laserdiodengepumptes Nd-YAG-Lasersystem angewendet werden kann. Bei einem solchen System kann der Laserkopf der Lasereinrichtung wesentlich kleiner bauen, wenn Hochleistungslaserdiodenarrays eingesetzt werden. Der Wirkungsgrad der Lasereinrichtung ist wesentlicher höher, als der herkömmlicher lampengepumpter Systeme, was zu einer Verkleinerung des Kühlers und des Netzteils führt. Zudem ermöglicht dies in der Regel den Anschluß an eine mit 16 A abgesichterte 220V-Steckdose, so daß auf höher abgesicherten Drehstrom verzichtet werden kann. Die Lebensdauer der Dioden kann die der Lampen um ein vielfaches übertreffen und damit die Wartungintervalle des Geräts verlängern. Es können Ölkühler in einem Sekundärkreislauf eingesetzt werden, um die Querschnitte der Kühlleitungen gebräuchlicher Wasserkühler zu verkleinern. Auch ein ölgekühltes Netzteil kann in seiner Baugröße beträchtlich verkleinert werden, weil die Wärmebelastungen durch verbesserte Kühlung verringert werden. Es ist möglich, ein 150 W-Lasersystem mit Q-Switch, Kühlung, Netzteil, Elektronik und Absaugung in der Größe so zu reduzieren, daß das gesamte Laserstrahlgerät mit einer Hand vom Benutzer hinterhergezogen werden kann.

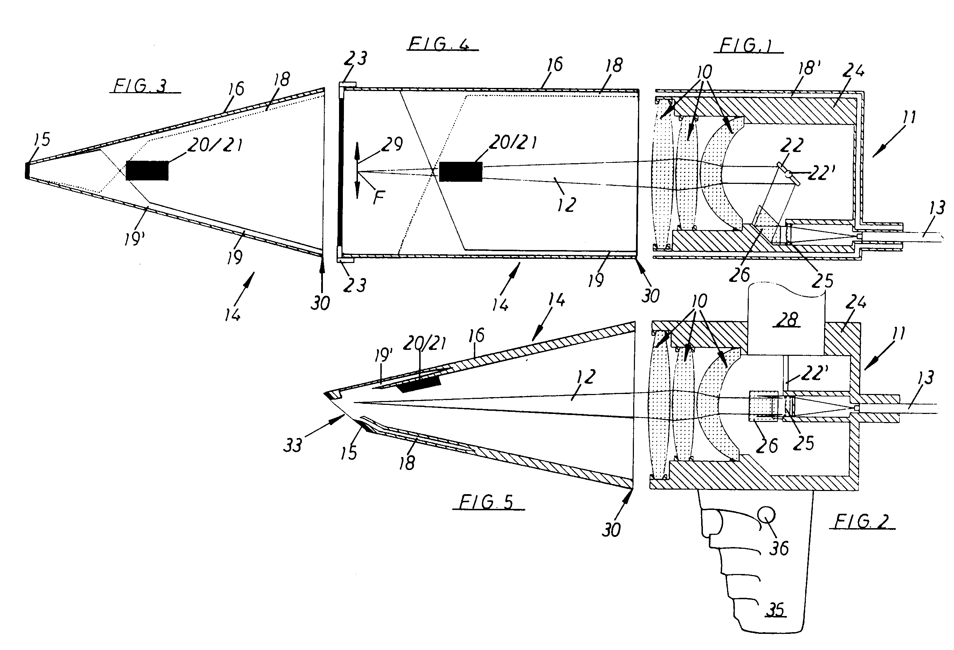

Sofern die Positionierung des Fokus F nicht im vorbeschriebenen Maße präzise sein muß, z.B. beim Abtragen einer Deckschicht von einem Werkstück, wenn die Deckschicht auch schon bei geringerer Energiedichte zu entfernen ist, kann die Führung des Strahlabgabekopfs 11 von Hand erfolgen. Die Größe des Strahlflecks oder dessen Abbildung lassen dann eine hinreichende Aussage über den richtigen Abstand des Strahlabgabekopfs vom Werkstück zu. Wenn jedoch schnell gearbeitet werden soll oder etwaige Deckschichten oder andere Verfahren durchgeführt werden sollen, wie beispielsweise das Fügen, ist üblicherweise eine präzise Einhaltung des Abstands des Strahlabgabekopfs 11 von der Werkstückoberfläche unerläßlich. Es ist daher ein Abstandhalter 14 vorgesehen, der in Fig.3 bis 5 beispielsweise dargestellt ist.

Der Abstandhalter 14 der Fig.3 hat eine praktisch kegelstumpfförmige Hohlstruktur mit dünner Wand 16. Mit seinem dem Strahlabgabekopf 11 zugewendeten Ende 30 kann er an einem Befestigungsflansch des Gehäuses 24 befestigt werden, beispielsweise mit einem Bajonettverschluß und/oder mit Befestigungsschrauben. Das werkstückseitige Ende des Abstandhalters 14 wird auf dem Werkstück aufgesetzt, so daß eine präzise Beabstandung des Strahlabgabekopfs 11 vom Werkstück gewährleistet ist. Der Abstandhalter 14 ist der Form des Werkstücks mehr oder weniger angepaßt. Aus Fig.3,5 ergibt sich das spitze, werkstückseitige Ende des Abstandhalters 14 mit einem Abdichtungsmittel 15 in Gestalt einer ringförmigen Gummilippe eines Teflonaufsatzes oder eines Aufsatzes aus faserverstärktem Teflon. Mit Hilfe dieses Abdichtungsmittels 15 und infolge der den Laserstrahl 12 ringsum abdeckenden Struktur des Abstandhalters 14 ist die Bearbeitungsstelle des Werkstücks und der Raum zum Strahlabgabekopf vollständig abgeschirmt. Die Spitze des Abstandhalters 14 ist im Bereich der Austrittsöffnung 33 angeschrägt, um eine bessere, ziehende Führung auf dem Werkstück zu erreichen.

Fig.4 zeigt eine abweichende Gestaltung des Abstandhalters 14, der strahlabgabekopfseitig wiederum mit einem ankoppelbaren Ende 30 versehen ist. Er kann jedoch ein im Querschnitt kreiszylindrisches Gehäuse mit einer dementsprechend großen kreisförmigen Austrittsöffnung 33 für den Laserstrahl 12 haben. Der Laserstrahl 12 kann eine entsprechend kreisförmige Bahn innerhalb des Abstandhalters 14 beschreiben, sofern der Strahlabgabekopf 11 in nicht dargestellter Weise mit zwei, die Kreisablenkung des Strahls 12 bewirkenden Schwingspiegeln 22 oder mit einem akusto-optischen Modulator ausgerüstet ist. Ist nur ein Schwingspiegel vorhanden, so entfallen entsprechende Querablenkungen und der Laserstrahl wird beispielsweise nur in der Darstellungsebene der Fig.4 hinund herbewegt, also linienförmig gescannt. In diesem Fall kann das Gehäuse des Abstandhalters 14 vom Ende 30 zur Austrittsöffnung 33 hin auf zwei einander gegenüberliegenden Seiten abgeflacht keilförmig ausgebildet sein. Es ergibt sich dann ein Querschnitt gemäß Fig.5 mit einer linienförmigen bzw. rechteckförmigen Austrittsöffnung 33.

Fig.5 zeigt für den Fall eines hin- und hergehenden Laserstrahls zwei Strahlbegrenzer bzw. Strahlfallen 23, die einander gegenüberliegend angeordnet sind und den Umkehrbereich des Laserstrahls 12 abdecken, so daß der Laserstrahl nicht auf das Werkstück gelangen kann. Es wird vermieden, daß der im Umkehrbereich langsame Laserstrahl zu lange auf dem Werkstück verweilt und damit ungewöhnlich viel Energie einkoppelt, was zu einem über das Entfernen der Deckschicht hinaus erfolgenden, unerwünscht tiefen Aufschmelzen des Grunomaterials führen könnte. Die auf die Strahlfalle einwirkende Energie kann bedarfsweise weggekühlt werden.

Bei allen Ausgestaltungen des Abstandshalters 14 ist es möglich, Zuleitungen 18 vorzusehen, die der Schutzgaszuleitung, der Prozeßgaszuleitung oder einer Zusatzwerkstoff-Zuleitung dienen. Fig.3 zeigt eine Zuleitung 18, die an dem Ende 30 des Abstandhalters 14 von einer entsprechenden Zuleitung 18' des Abstandhalters 14 versorgt werden kann. Das erleichtert die Anwendung unterschiedlicher Abstandhalter, da die Verbindung der Zuleitungen 18,18' miteinander automatisch beim Ankoppeln des Abstandhalters 14 an den Strahlabgabekopf erfolgt. Werkstückseitig mündet die Zuleitung 18 in der Nähe der Austrittsöffnung 33 des Abstandshalters 14, so daß das zugeführte Medium der Bearbeitungsstelle des Werkstücks entsprechend präzise übergeben wird.

Es ist auch möglich, das Lasergerät mit einer Absaugeinrichtung zu betreiben. Von einer solchen Absaugeeinrichtung ist in Fig.3 lediglich eine Ableitung 19 dargestellt, deren Ende 19' in einigem Abstand von der Bearbeitungsstelle des Werkstücks 10 bzw. der Austrittsöffnung 33 angeordnet ist, damit in erster Linie nur die unerwünschten Emissionen abgesaugt werden, nicht aber das Schutz- oder Prozeßgas.

Die Abstandhalter 14 müssen unterschiedlichen Bearbeitungsaufgaben angepaßt werden. Es ist nicht nur erforderlich, sie auf unterschiedliche Strahlführungen abzustimmen, sondern sie müssen auch für die Bearbeitung von Ecken, Kanten, runden Geometrien etc. geeignet sein. Auch unterschiedliche Verfahren, z.B. mit oder ohne Zufuhr von Zusatzwerkstoff, Komponenten eines den Bearbeitungsbereich beobachtenden Bildverarbeitungssystems oder eines Autofokussystems können zu unterschiedlichen Ausgestaltungen von Abstandhaltern 14 führen. In allen Fällen ist es jedoch nicht erforderlich, das Lasergerät im übrigen zu ändern, also im Bereich der Lasereinrichtung oder des Strahlabgabekopfs 11. Durch unterschiedlich ausgebildete Abstandhalter 14 kann das Lasergerät daher für eine Vielzahl von Einsatzzwecken ausgerüstet werden. Derart vielfältig einsetzbare Lasergeräte sind bisher nicht bekannt.

Dabei kann das Lasergerät auch hinsichtlich der Überwachung des Prozesses und der Sicherheitsaspekte in vergleichsweise einfacher Weise ausgebildet werden. Beispielsweise ist der Abstandhalter 14 mit einem berührungsfrei wirkenden Sensor 20 zum Überprüfen des Aufliegens des Abstandhalters 14 auf dem Werkstück ausgerüstet. Dieser Sensor 20 erhält bei-spielsweise ein Lichtsignal von einer nicht dargestellten Laserdiode nur dann, wenn die Abdichtungsmittel 15 auf der Werkstückoberfläche aufliegen, weil nur dann das von der Laserdiode emittierte Licht auf den Sensor 20 reflektiert wird und dieser dadurch instandgesetzt wird, die Lasereinrichtung freizuschalten. Der Sensor 20 wirkt berührungsfrei. Es ist jedoch auch möglich, das Freischalten der Lasereinrichtung durch einen Sensor zu bewirken, der einen mechanischen Kontakt mit dem Werkstück benötigt.

Der vorbeschriebene Sensor wirkt prozeßüberwachend. Es ist nicht möglich, das Werkstück mit Laserstrahlung zu beaufschlagen, wenn der Abstandhalter 14 noch nicht auf dem Werkstück aufliegt. Der Abstandhalter 14 kann mit weiteren Sensormitteln ausgerüstet sein, beispielsweise mit einem sensiblen Sensor 21, der die Lasereinrichtung abschaltet, wenn die Werkstückoberfläche überlastet wird. Eine derartige thermische Überlastung äußert sich durch entsprechende Lichtemission, die beispielsweise durch einen entsprechend sensiblen Sensor 21 ermittelt werden kann.

Der vorbeschriebene Sensor 20 ist jedoch nicht nur dazu geeignet, den Bearbeitungsprozeß zu überwachen, sondern seine Nichtfreischaltung der Lasereinrichtung hat auch den Hintergrund, daß ein ungewolltes Einschalten der Lasereinrichtung vermieden wird und damit eine Gefährdung des Benutzers oder anderer Personen. Die Sicherheit bei der Bedienung des Lasergeräts kann noch weiter verbessert werden, indem beispielsweise eine Zweihandbedienung vorgesehen ist. Lediglich wenn der Benutzer den Strahlabgabekopf 11 mit zwei Händen anfaßt und dabei zwei Betätigungselemente gleichzeitig bedient, wird die Lasereinrichtung freigeschaltet. Fig.2 zeigt einen Handgriff 35 mit einem solchen Bedienelement 36. Eine entsprechende Ausgestaltung kann sich auch auf der anderen Seite des Strahlabgabekopfs 11 befinden.

## Patentansprüche

1. Laserstrahlgerät zum Abtragen von Oberflächenschichten von Werkstücken, mit einem mit einer Fokussieroptik (10) versehenen, handführbaren Strahlabgabekopf (11),
- der an eine einen Laserstrahl (12) erzeugende Lasereinrichtung lichtzuleitend angeschlossen ist,
- der eine den Laserstrahl (12) bewegende Strahlablenkrichtung aufweist,
- der den Laserstrahl (12) mit einer Spitze seitlich abdeckt und ihn durch eine werkstückseitige Austrittsöffnung (33) frei gibt,
- und der einen den Abstand des Strahlabgabekopfs (11) vom Werkstück einzustellen erlaubenden Abstandhalter (14) hat,
**dadurch gekennzeichnet**, daß der Abstandhalter (14) die den Laserstrahl (12) seitlich abdeckende Spitze des Strahlabgabekopfs (11) ist, die auf dem Werkstück abdichtend abstützbar ist, daß der Laserstrahl (14) von der Strahlablenkeinrichtung auf einer vorbestimmten Bahn durch eine bahnangepaßte Austrittsöffnung des Abstandhalters (14) oszillierbar ist, und daß die Fokussieroptik (10) die Fokussierung des Laserstrahls (12) in Abhängigkeit von der Strahlablenkung im Sinne eines auf der Werkstückoberfläche liegenden Fokus zu ändern vermag.

2. Laserstrahlgerät nach Anspruch 1, **dadurch gekennzeichnet**, daß der Abstandhalter (14) am Strahlabgabekopf (11) auswechselbar befestigt ist und/oder daß die Fokussierungsoptik (10) mit dem Strahlabgabekopf (11) auswechselbar verbunden ist.

3. Laserstrahlgerät nach Anspruch 1 oder 2**, durch gekennzeichnet**, daß der Abstandhalter (14) werkstückseitig Abdichtungsmittel (15) und/oder gleitreibungsmindernde Mittel aufweist.

4. Laserstrahlgerät nach einem der Ansprüche 1 bis 3, **dadurch gekennzeichnet**, daß der Abstandhalter (14) mit einem Inkrementgeber zusammenwirkt, der an eine Regeleinrichtung zur Regelung von Betriebsparametern, wie zur Regelung der Laserleistung im Sinne gleicher Leistung pro Flächeneinheit, der Lasereinrichtung angeschlossen ist.

5. Laserstrahlgerät nach einem der Ansprüche 1 bis 4, **dadurch gekennzeichnet**, daß der Abstandhalter (14) längeneinstellbar und/oder in unterschiedlichen Querschnittsgestaltungen ausgebildet ist.

6. Laserstrahlgerät nach einem der Ansprüche 1 bis 5, **dadurch gekennzeichnet**, daß die Austrittsöffnung (33) für den Laserstrahl (12) an dessen Strahlfleck- bzw. Strahlquerschnittsform angepaßt ist und bedarfsweise eine zusätzliche Freifläche zur Beobachtung der Werkstückoberfläche hat.

7. Laserstrahlgerät nach einem der Ansprüche 1 bis 6, **dadurch gekennzeichnet**, daß der Abstandhalter (14) eine kegelstumpfförmige, eine pyramidenartige oder eine kreiszylinderförmige Hohlstruktur mit dünner Wand (16) hat, die dem Bewegungsraum des relativ zum Abstandhalter (14) beweglichen Laserstrahls (12) angepaßt ist.

8. Laserstrahlgerät nach einem der Ansprüche 1 bis 7, **dadurch gekennzeichnet**, daß der Abstandhalter (14) werkstückseitig einer Profilierung des Werkstücks angepaßt ist, bedarfsweise mit einer im Bereich einer Austrittsöffnung (33) angeschrägten Spitze.

9. Laserstrahlgerät nach einem der Ansprüche 1 bis 8, **dadurch gekennzeichnet**, daß der Abstandhalter (14) mit einer Schutzgas- und/oder Prozeßgas- und/oder Zusatzwerkstoff-Zuleitung (18) versehen ist.

10. Laserstrahlgerät nach einem der Ansprüche 1 bis 9, **dadurch gekennzeichnet**, daß der Abstandhalter (14) einen berührungsfrei wirkenden und/oder einen kontaktwirksamen Sensor (20) zum Freischalten der Lasereinrichtung aufweist.

11. Laserstrahlgerät nach einem der Ansprüche 1 bis 10, **dadurch gekennzeichnet**, daß der Abstandhalter (14) einen thermisch sensiblen Sensor (21) zum Abschalten der Lasereinrichtung bei thermischer Überlastung der Werkstückoberfläche hat und/oder an einen Spektrographen zur on-line-Analyse von vom Werkstück herrührender Emissionen angeschlossen ist.

12. Laserstrahlgerät nach einem der Ansprüche 1 bis 11, **dadurch gekennzeichnet**, daß die Strahlablenkeinrichtung mit mindestens einem beweglichen Spiegel (22) und/oder mit einem Rotationsspiegel mit Schrauben-Wendelfläche ausgerüstet ist.

13. Laserstrahlgerät nach Anspruch 12, **dadurch gekennzeichnet**, daß die Winkelgeschwindigkeit des beweglichen Spiegels (22) on-line meßbar ist und aufgrund dessen Betriebsparameter der Lasereinrichtung derart steuerbar sind, daß jeder Punkt der Werkstückoberfläche mit der gleichen Energiedichte beaufschlagt wird.

14. Laserstrahlgerät nach einem der Ansprüche 1 bis 13, **dadurch gekennzeichnet**, daß der Abstandhalter (14) werkstückseitig mit mindestens einer Strahlfalle (23) versehen ist, die in den Bereich der Umkehrpunkte der Laserstrahlbahn hineinragt.

15. Laserstrahlgerät nach Anspruch 14, **dadurch gekennzeichnet**, daß die Strahlfalle (23) gekühlt und/oder quer zum Laserstrahl (12) verstellbar und/oder bei Bestrahlung mit dem Laserstrahl (12) signalgebend und/oder Gasströmungsquerschnitte verändernd ausgebildet ist.

16. Laserstrahlgerät nach einem der Ansprüche 1 bis 15, **dadurch gekennzeichnet**, daß der Strahlabgabekopf (11) mit einer den Fokus des Laserstrahls (12) auf einer gekrümmten oder planen Oberfläche des Werkstücks abbildenden Fokussieroptik (10) versehen ist.

17. Laserstrahlgerät nach einem der Ansprüche 1 bis 16, **dadurch gekennzeichnet**, daß der Strahlabgabekopf (11) zumindest mit der optischen, den Bearbeitungsbereich beobachtenden Komponente eines Bildverarbeitungssystems bestückt ist, das bedarfsweise mit einer auf die Strahlablenkeinrichtung wirkenden Nahtverfolgungseinrichtung versehen ist.

18. Laserstrahlgerät nach einem der Ansprüche 1 bis 17, **dadurch gekennzeichnet**, daß es mit einer Autofokuseinrichtung für die Laserstrahlung versehen ist.

19. Laserstrahlgerät nach einem der Ansprüche 1 bis 18, **dadurch gekennzeichnet**, daß der Strahlabgabekopf (11) mit einem Zwei-Hand-Bedienung erzwingenden Griffbereich ausgebildet ist.

20. Laserstrahlgerät nach einem der Ansprüche 1 bis 19, **dadurch gekennzeichnet**, daß der Strahlabgabekopf (11) mit einer freibeweglichen Lichtwellenleitung an die Lasereinrichtung angeschlossen ist und eine Justiereinrichtung zur axialen und radialen Positionierung des Endes der eine oder mehrere Fasern aufweisenden Lichtwellenleitung (13) aufweist.

21. Laserstrahlgerät nach einem der Ansprüche 1 bis 20, **dadurch gekennzeichnet,** daß die vorbestimmte Bahn des Laserstrahls (12) eine Linie einstellbarer Breite oder ein Kreis einstellbaren Durchmessers oder eine Ellipse einstellbarer Halbachsen ist.

22. Verfahren zum Abtragen von Oberflächenschichten von Werkstücken mit einem eine Fokussierungsoptik (10) und eine Strahlablenkeinrichtung aufweisenden, einen Laserstrahl (12) abgehenden Bearbeitungskopf, der freihandgeführt wird, **dadurch gekennzeichnet,** daß der Laserstrahl während des Freihandführens durch Strahlablenkung mit einem auf der Werkstückoberfläche liegenden Fokus oszilliert wird.

23. Verfahren zum Abtragen von Oberflächenschichten von Werkstücken, mit einem eine Fokussierungsoptik (10) und eine Strahlablenkeinrichtung aufweisenden, einen Laserstrahl (12) abgehenden Bearbeitungskopf, der an eine Laserstrahlung erzeugende Lasereinrichtung lichtzuleitend angeschlossen ist, unter Verwendung eines Laserstrahlgeräts nach einem der Ansprüche 1 bis 21, **dadurch gekennzeichnet,** daß es zum Entzundern von nichtrostendem Stahl mit einer Zunderschicht vom Warmwalzen mit einer Intensität von etwa 10⁶ bis 10⁷ W/cm² bei einer Energiedichte von etwa 100 J/cm² auf der Werkstückoberfläche eine Zunderschicht von etwa 3 bis 15 µm durchgeführt wird, wobei eine auf den bestrahlten Bereich der Werkstückoberfläche gerichtete Schutzgaszufuhr erfolgt.

24. Verfahren nach Anspruch 23, **dadurch gekennzeichnet,** daß als Schutzgas Stickstoff verwendet wird.

## Claims

1. Laser beam apparatus for removing surface layers from workpieces, comprising a manually guided beam-output head (11) provided with a focussing lens system (10),
- the head being connected in a light-delivering manner to a laser device producing a laser beam (12),
- the head comprising a beam-deflection device which moves the laser beam (12),
- the head covering the laser beam (12) laterally with a tip and allowing it to pass freely through an outlet opening (33) on the workpiece side,
- and the head having a spacer (14) enabling the setting of the distance between the beam-output head (11) and the workpiece,
characterised in that the spacer (14) is the tip of the beam-output head (11) laterally covering the laser beam (12), the head is sealingly supportable on the workpiece, the laser beam (14) can be oscillated by the beam-deflection device on a predetermined track through a track-adapted outlet opening of the spacer (14), and the focussing lens system (10) permits the focussing of the laser beam (12) to be varied in dependence upon the beam deflection with a focus lying on the workpiece surface.

2. Laser beam apparatus according to claim 1, characterised in that the spacer (14) is removably fixed to the beam-deflection head (11) and/or the focussing lens system (10) is removably connected to the beam-deflection head (11).

3. Laser beam apparatus according to claim 1 or 2, characterised in that the spacer (14) comprises sealing means (15) on the workpiece side and/or means to reduce sliding friction.

4. Laser beam apparatus according to one or more of claims 1 to 3, characterised in that the spacer (14) cooperates with an increment transducer which is connected to a control device for the adjustment of operating parameters of the laser device, such as for the adjustment of the laser power in the sense of equal power per unit of surface area.

5. Laser beam apparatus according to one or more of claims 1 to 4, characterised in that the spacer (14) is adjustable lengthwise and/or is formed in different cross-sectional shapes.

6. Laser beam apparatus according to one or more of claims 1 to 5, characterised in that the outlet opening (33) for the laser beam (12) is matched to its beam spot shape or beam cross-sectional shape, and, as required, has an additional free surface area for observing the workpiece surface.

7. Laser beam apparatus according to one or more of claims 1 to 6, characterised in that the spacer (14) has a frusto-conical, a pyramidal or a circular cylindrical hollow structure with thin walls (16) which is adapted to the movement space of the laser beam (12) which is movable relative to the spacer (14).

8. Laser beam apparatus according to one or more of claims 1 to 7, characterised in that the spacer (14) is matched on the workpiece side to a profiling of the workpiece, if required with a tip which is chamfered in the region of an outlet opening (33).

9. Laser beam apparatus according to one or more of claims 1 to 8, characterised in that the spacer (14) is provided with a supply line (18) for a protective gas and/or process gas and/or additional material.

10. Laser beam apparatus according to one or more of claims 1 to 9, characterised in that the spacer (14) comprises a contact-free and/or a contact sensor (20) for the free switching of the laser device.

11. Laser beam apparatus according to one or more of claims 1 to 10, characterised in that the spacer (14) has a thermally responsive sensor (21) for switching off the laser device upon thermal overload of the workpiece surface and/or is connected to a spectograph for the on-line analysis of emissions originating from the workpiece.

12. Laser beam apparatus according to one or more of claims 1 to 11, characterised in that the beam-deflection device is equipped with at least one movable mirror (22) and/or with a rotatable mirror with helical screw surface.

13. Laser beam apparatus according to claim 12, characterised in that the angular velocity of the movable mirror (22) is measurable on-line and on the basis of its operating parameter the laser device is controllable such that each point of the workpiece surface is subjected to the same energy density.

14. Laser beam apparatus according to one or more of claims 1 to 13, characterised in that the spacer (14) is provided on the workpiece side with at least one beam trap (23) which projects into the region of the point of reversal of the laser beam path.

15. Laser beam apparatus according to claim 14, characterised in that the beam trap (23) is cooled and/or is adjustable transversely to the laser beam (12) and/or emits signals when irradiated by the laser beam (12) and/or is formed to be variable for gas flow cross-sections.

16. Laser beam apparatus according to one or more of claims 1 to 15, characterised in that the beam-output head (11) is provided with a focussing lens system (10) which images the focus of the laser beam (12) on a curved or plane surface of the workpiece.

17. Laser beam apparatus according to one or more of claims 1 to 16, characterised in that the beam-output head (11) is fitted at least with the optical components of an image processing system observing the operating region, said processing system, as required, being provided with a seam-following device acting on the beam-deflection device.

18. Laser beam apparatus according to one or more of claims 1 to 17, characterised in that it is provided with an autofocus device for the laser radiation.

19. Laser beam apparatus according to one or more of claims 1 to 18, characterised in that the beam-output head (11) is formed with a grip zone requiring two-handed operation.

20. Laser beam apparatus according to one or more of claims 1 to 19, characterised in that the beam-output head (11) is connected to a freely movable light wave conductor on the laser device and comprises an adjusting device for the axial and radial positioning of the end of the light wave conductor (13) which comprises one or more fibres.

21. Laser beam apparatus according to one or more of claims 1 to 12, characterised in that the predetermined track of the laser beam (12) is a line of adjustable width or a circle of adjustable diameter or an ellipse of adjustable semi-axis.

22. Method for removing surface layers from workpieces using a treatment head which is freely manually guided, which comprises a focussing lens system (10) and a beam-deflection device and which delivers a laser beam (12), characterised in that the laser beam is oscillated during the freehand guidance by deflection of the beam with a focus lying on the workpiece surface.

23. Method for removing surface layers from workpieces, using a treatment head which comprises a focussing lens system (10) and a beam-deflection device, which delivers a laser beam (12) and which is connected in a light transmitting manner to a laser device producing laser radiation, while using a laser beam apparatus according to one of claims 1 to 21, characterised in that the method is carried out for the descaling of stainless steel having a scale layer from the hot rolling, the method being performed on a scale layer of about 3 to 15 um with an intensity of about 10⁶ to 10⁷ W/cm² at an energy density of about 100 J/cm² on the workpiece surface, wherein a protective gas supply is then directed onto the irradiated region of the workpiece surface.

24. Method according to claim 23, characterised in that nitrogen is used as protective gas.

## Revendications

1. Appareil à rayon laser pour enlever des couches superficielles sur des pièces à usiner, comportant une tête d'émission de rayon (11) apte à être guidée avec la main et pourvue d'une optique de focalisation (10), laquelle tête d'émission de rayon (11)
- est reliée pour une transmission de lumière à un dispositif laser qui génère un rayon laser (12),
- comporte un dispositif de déviation de rayon qui déplace le rayon laser (12),
- couvre latéralement le rayon laser (12) avec une pointe et le libère grâce à une ouverture de sortie (33) située côté pièce à usiner,
- et comporte un élément d'espacement (14) qui permet de régler l'espacement entre la tête d'émission de rayon (11) et la pièce à usiner,
**caractérisé** en ce que l'élément d'espacement (14) est défini par la pointe de la tête d'émission de rayon (11) qui couvre latéralement le rayon laser (12), laquelle pointe est apte à s'appuyer de manière étanche sur la pièce à usiner, en ce que le rayon laser (12) est apte à osciller grâce au dispositif de déviation de rayon sur une trajectoire prédéfinie, à travers l'ouverture de sortie, adaptée à la trajectoire, de l'élément d'espacement (14), et en ce que l'optique de focalisation (10) peut modifier la focalisation du rayon laser (12) en fonction de la déviation de rayon, avec un foyer situé sur la surface de la pièce à usiner.

2. Appareil à rayon laser selon la revendication 1, **caractérisé** en ce que l'élément d'espacement (14) est fixé à la tête d'émission de rayon (11) de manière à pouvoir être changé, et/ou en ce que l'optique de focalisation (10) est reliée à la tête d'émission de rayon (11) de manière à pouvoir être changée.

3. Appareil à rayon laser selon la revendication 1 ou 2, **caractérisé** en ce que l'élément d'espacement (14) comporte, côté pièce à usiner, des moyens d'étanchéité (15) et/ou des moyens qui réduisent le frottement par glissement.

4. Appareil à rayon laser selon l'une au moins des revendications 1 à 3, **caractérisé** en ce que l'élément d'espacement (14) coopère avec un générateur incrémentiel qui est relié à un dispositif régulateur destiné à régler des paramètres de fonctionnement et à régler la puissance de laser dans le sens d'une puissance égale par unité de surface pour le dispositif laser.

5. Appareil à rayon laser selon l'une au moins des revendications 1 à 4, **caractérisé** en ce que l'élément d'espacement (14) est réglable en longueur et/ou présente différentes formes de section transversale.

6. Appareil à rayon laser selon l'une au moins des revendications 1 à 5, **caractérisé** en ce que l'ouverture de sortie (33) pour le rayon laser (12) est adaptée à la forme des taches du rayon ou à la forme de section transversale de celui-ci et présente au besoin une surface libre supplémentaire pour l'observation de la surface de la pièce à usiner.

7. Appareil à rayon laser selon l'une au moins des revendications 1 à 6, **caractérisé** en ce que l'élément d'espacement (14) a une structure creuse tronconique, pyramidale ou cylindrique circulaire à paroi mince (16), qui est adaptée à l'espace de mouvement du rayon laser (12) mobile par rapport à l'élément d'espacement (14).

8. Appareil à rayon laser selon l'une au moins des revendications 1 à 7, **caractérisé** en ce que l'élément d'espacement (14) est adapté, côté pièce à usiner, à un profil de la pièce à usiner, au besoin avec une pointe biseautée dans la zone d'une ouverture de sortie (33).

9. Appareil à rayon laser selon l'une au moins des revendications 1 à 8, **caractérisé** en ce que l'élément d'espacement (14) est pourvu d'une ligne d'amenée de gaz protecteur et/ou de gaz de traitement et/ou de matière supplémentaire (18).

10. Appareil à rayon laser selon l'une au moins des revendications 1 à 9, **caractérisé** en ce que l'élément d'espacement (14) comporte un capteur (20) agissant sans contact et/ou avec contact pour déclencher le dispositif laser.

11. Appareil à rayon laser selon l'une au moins des revendications 1 à 10, **caractérisé** en ce que l'élément d'espacement (14) a un capteur thermosensible (21) pour arrêter le dispositif laser en cas de surcharge thermique de la surface de la pièce à usiner, et/ou est relié à un spectrographe destiné à analyser en ligne des émissions provenant de la pièce à usiner.

12. Appareil à rayon laser selon l'une au moins des revendications 1 à 11, **caractérisé** en ce que le dispositif de déviation de rayon est équipé d'au moins un miroir mobile (22) et/ou d'un miroir rotatif à surface hélicoïdale.

13. Appareil à rayon laser selon la revendication 12, **caractérisé** en ce que la vitesse angulaire du miroir mobile (22) peut être mesurée en ligne, et à partir de là, des paramètres de fonctionnement du dispositif laser peuvent être commandés de telle sorte que chaque point de la surface de la pièce à usiner soit sollicité avec la même intensité de flux d'énergie.

14. Appareil à rayon laser selon l'une au moins des revendications 1 à 13, **caractérisé** en ce que l'élément d'espacement (14) est pourvu, côté pièce à usiner, d'au moins un piège de rayon (23) qui pénètre dans la zone des points d'inversion de la trajectoire du rayon laser.

15. Appareil à rayon laser selon la revendication 14, **caractérisé** en ce que le piège de rayon (23) est conçu pour être refroidi et/ou pour être réglable transversalement par rapport au rayon laser (12) et/ou pour émettre des signaux lorsqu'il est exposé au rayon laser (12) et/ou pour modifier les sections transversales d'écoulement de gaz.

16. Appareil à rayon laser selon l'une au moins des revendications 1 à 15, **caractérisé** en ce que la tête d'émission de rayon (11) est pourvue d'une optique de focalisation (10) qui représente le foyer du rayon laser (12) sur une surface courbe ou plane de la pièce à usiner.

17. Appareil à rayon laser selon l'une au moins des revendications 1 à 16, **caractérisé** en ce que la tête d'émission de rayon (11) est équipée au moins de l'élément optique d'un système de traitement d'images qui observe la zone d'usinage, lequel système de traitement d'images est pourvu au besoin d'un dispositif de poursuite de joint qui agit sur le dispositif de déviation de rayon.

18. Appareil à rayon laser selon l'une au moins des revendications 1 à 17, **caractérisé** en ce qu'il est pourvu d'un dispositif de focalisation automatique pour le rayonnement laser.

19. Appareil à rayon laser selon l'une au moins des revendications 1 à 18, **caractérisé** en ce que la tête d'émission de rayon (11) est pourvue d'une zone de préhension qui oblige à la manoeuvrer à deux mains.

20. Appareil à rayon laser selon l'une au moins des revendications 1 à 19, **caractérisé** en ce que la tête d'émission de rayon (11) est reliée à l'aide d'un guide d'ondes optique librement mobile au dispositif laser et comporte un dispositif d'ajustage pour le positionnement axial et radial de l'extrémité du guide d'ondes optique (13) comportant une ou plusieurs fibres.

21. Appareil à rayon laser selon l'une des revendications 1 à 20, **caractérisé** en ce que la trajectoire prédéfinie du rayon laser (12) consiste en une ligne à largeur réglable, en un cercle à diamètre réglable ou en une ellipse à demi-axes réglables.

22. Procédé pour enlever des couches superficielles sur des pièces à usiner, à l'aide d'une tête de traitement qui comporte une optique de focalisation (10) et un dispositif de déviation de rayon, qui émet un rayon laser (12) et qui est apte à être guidée avec la main, **caractérisé** en ce que pendant le guidage avec la main, le rayon laser oscille grâce à la déviation de rayon, avec un foyer situé sur la surface de la pièce à usiner.

23. Procédé pour enlever des couches superficielles sur des pièces à usiner, à l'aide d'une tête de traitement qui comporte une optique de focalisation (10) et un dispositif de déviation de rayon, qui émet un rayon laser (12) et qui est reliée pour une transmission de lumière à un dispositif laser qui génère un rayonnement laser, en utilisant un appareil à rayon laser selon l'une des revendications 1 à 21, **caractérisé** en ce qu'il est mis en oeuvre pour décalaminer un acier inoxydable présentant une couche de calamine provenant du laminage à chaud, avec une intensité d'environ 10⁶ à 10⁷ W/cm² pour une intensité de flux d'énergie d'environ 100 J/cm² sur la surface de pièce à usiner, à savoir une couche de calamine d'environ 3 à 15 µm, étant précisé qu'il y a une amenée de gaz protecteur dirigée vers la zone de la pièce à usiner qui est exposée au rayonnement.

24. Procédé selon la revendication 23, **caractérisé** en ce qu'on utilise comme gaz protecteur de l'azote.
